# FASCICULE DE BREVET EUROPEEN

(11) **EP 0 814 625 B1**
(45) Date de publication et mention de la délivrance du brevet: **23.05.2001**
(21) Numéro de dépôt: 97460022.3
(22) Date de dépôt: 13.06.1997
(51) Int. Cl.: H04Q 7/24, H04Q 11/04

(54) **Réseau local d'accès à des mobiles équipé de moyens pour gérer les ressources dans ledit réseau**
Lokales Netz mit Zugang für mobile Teilnehmer, welches mit Mitteln zur Verwaltung der Systemressourcen ausgestattet ist
Local access network for mobiles equipped with means for administering the resources in said network

(30) Priorité: 20.06.1996 FR 9607904
(43) Date de publication de la demande: 29.12.1997
(73) Titulaire: FRANCE TELECOM SA, 75015 Paris (FR)
(72) Inventeur: Quinquis, Jean-Paul, 22700 Perros-Guirec (FR); Roussel, Olivier, 22700 Perros-Guirec (FR); Hue, Laurent, 22300 Lannion (FR)
(74) Mandataire: Maillet, Alain

(56) Documents cités:
- EP-A- 0 679 042
- YU O T W ET AL: "CONNECTION ESTABLISHMENT OVER B-ISDN TO SUPPORT WIRELESS PCN HANDOFF PROCESSING" PROCEEDINGS OF THE PACIFIC RIM CONFERENCE ON COMMUNICATIONS, COMPUTERS, AND SIGNAL PROCESSING. (PAC RIM), VICTORIA, BRITISH COLUMBIA, CA, 17-19 MAY 1995, pages 215-218, XP000559546
- VAN HAUWERMEIREN L ET AL: "REQUIREMENTS FOR MOBILITY SUPPORT IN ATM" PROCEEDINGS OF THE IEEE GLOBAL TELECOMMUNICATIONS CONFERENCE (GLOBECOM). COMMUNICATIONS: THE GLOBAL BRIDGE, SAN FRANCISCO, US, 28 NOV. - 2 DEC. 1994, vol. 3 OF 3, pages 1691-1695, XP000488814

## Description

La présente invention concerne un réseau local d'accès à des mobiles équipé de moyens pour gérer les ressources dans ledit réseau.

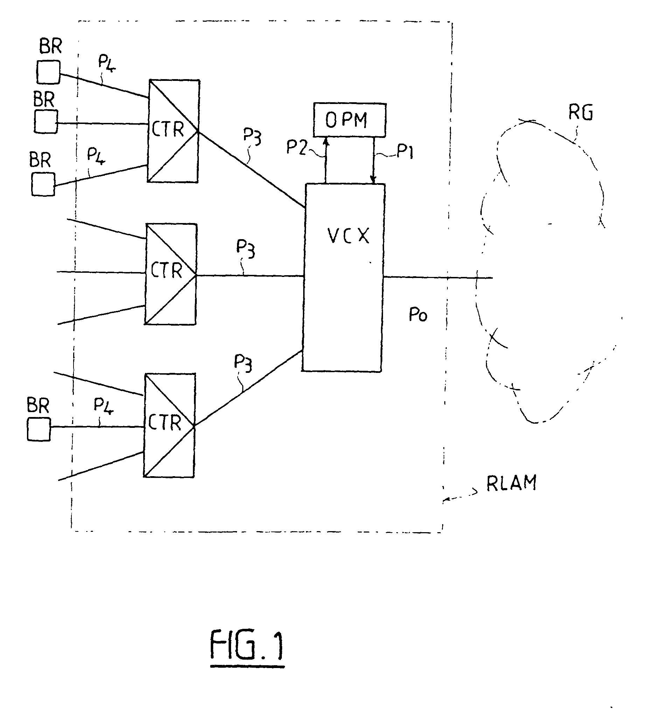

On a représenté à la Fig. 1 un réseau local d'accès à des mobiles RLAM auquel la présente invention peut s'appliquer. Ce réseau local est constitué d'une pluralité de bornes radio BR chacune reliée, par l'intermédiaire d'un multiplex marqué P4, à une pluralité de concentrateurs CTR (ici trois). Chaque concentrateur CTR est relié, par un multiplex marqué P3, à un commutateur de circuits virtuels VCX lui-même relié, par un multiplex marqué P0, à un réseau général RG. Chaque élément du réseau local RLAM utilise la technique connue sous le nom d'ATM (Asynchronous Transfer Mode).

On notera que les multiplex marqués P4, P3 et P0 sont des multiplex bidirectionnels.

Avec ce type de réseau d'accès, les communications sont gérées dans le commutateur VCX. Elles peuvent être locales lorsqu'elles sont établies entre des mobiles rattachés au réseau local RLAM considéré. Elles peuvent être sortantes lorsqu'elles sont établies entre des mobiles rattachés au réseau RLAM considéré et tout équipement terminal du réseau général RG.

Dans la présente description, on dira qu'un mobile est rattaché à un réseau local RLAM lorsqu'il passe sous la couverture radio de l'une des bornes BR connectées à ce réseau. A titre indicatif, la couverture d'un tel réseau pourrait être celle d'une agglomération moyenne. Toujours à titre indicatif, plusieurs réseaux de ce type peuvent être juxtaposés pour accroître la zone géographique couverte. C'est ainsi qu'un réseau d'envergure régionale ou nationale devrait regrouper un nombre plus ou moins important de réseaux locaux d'accès RLAM.

On comprendra que la présente invention n'est pas limitée à un réseau d'accès tel que celui qui est représenté sur la Fig. 1. Elle pourrait être appliquée à un réseau dont l'architecture est plus complexe parce que constitué d'un nombre d'étages de concentration et de commutation plus important.

Dans la présente description, on appellera étage de concentration aussi bien les concentrateurs CTR que le ou les commutateurs de circuits virtuels du réseau.

Par ailleurs, dans la présente description, on considère des réseaux locaux aussi bien dédiés que partagés. Dans les deux cas, les architectures sont voisines, les seules différences résidant dans le fait que le second présente des installations terminales autres que des mobiles.

Un mobile qui est déjà en communication et qui se trouve donc rattaché à une des bornes BR peut, lorsqu'il se déplace, se trouver sous la couverture d'une deuxième ou de plusieurs autres bornes radio BR. Il peut donc ainsi être momentanément rattaché à plusieurs bornes BR. On dit alors que ce mobile est dans une phase de "hand-over". Dans cette phase, les informations qu'il émet sont reçues simultanément par les bornes BR auxquelles il est rattaché et lui-même reçoit des informations provenant simultanément desdites bornes BR.

Les réseaux locaux pour mobiles RLAM comportent généralement un équipement serveur de macrodiversité OPM dont le rôle est précisé ci-dessous. A la Fig. 1, on a représenté un tel équipement qui est relié au commutateur VCX par deux multiplex marqués P1 et P2.

On notera que, contrairement aux multiplex P4, P3 et P0, les multiplex Pi et P2 sont des multiplex unidirectionnels. Ceci est schématisé par des flèches pour les multiplex unidirectionnels, par ailleurs absentes pour les multiplex bidirectionnels.

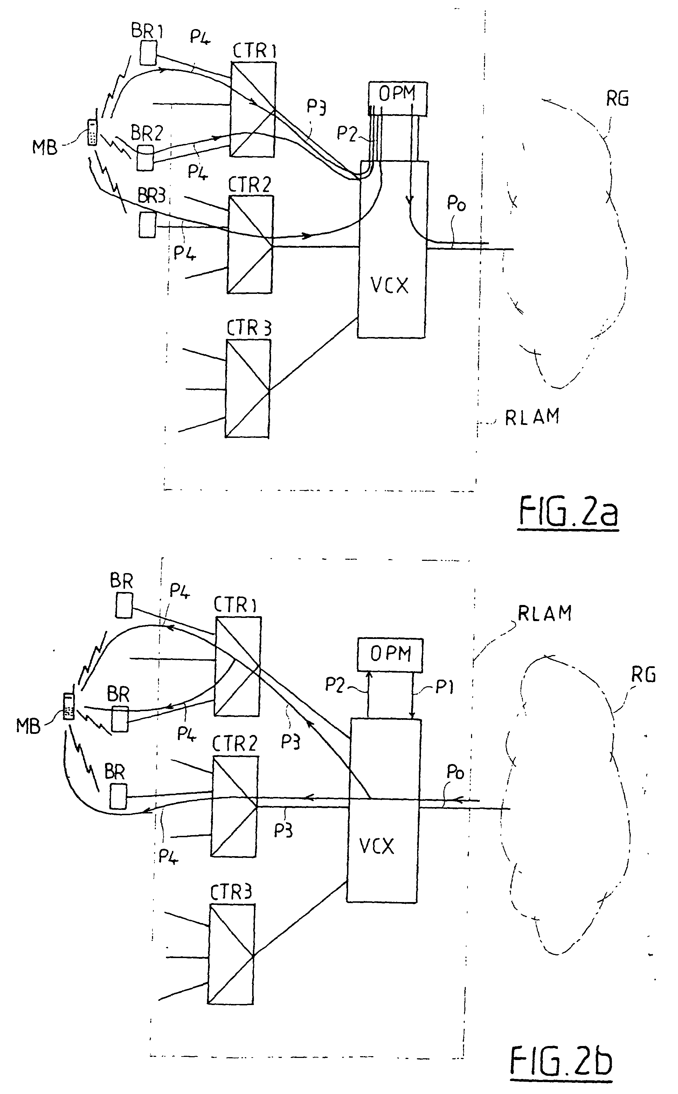

La Fig. 2a représente, dans le réseau RLAM représenté à la Fig. 1, le sens montant (mobile vers réseau) d'un exemple de communication pendant une phase de hand-over. Le mobile MB est rattaché à trois bornes BR1, BR2 et BR3 dont deux BR1 et BR2 sont reliées au même concentrateur CTR1 et la troisième BR3 au concentrateur CTR2. Dans ce sens montant, l'information émise par le mobile MB est donc recopiée trois fois dans le réseau local RLAM. Le débit est donc multiplié par deux sur le multiplex P3 entre le concentrateur CTR1 et le commutateur VCX et il est multiplié par 3 sur le multiplex P2.

De manière générale, dans le sens montant, le mobile MB est rattaché au réseau local RLAM autant de fois qu'il y a de bornes BR en écoute du mobile et le débit consommé dans le réseau est multiplié aux différents points de concentration.

D'un point de vue général, l'équipement serveur de macrodiversité OPM a pour fonction de filtrer les flux (ici trois) issus du même mobile MB et présents sur le multiplex P2, et de n'en conserver seulement qu'un, généralement celui qui présente la qualité la meilleure, qu'il délivre sur le multiplex P1, ceci afin de ne pas "encombrer" le réseau RLAM inutilement. Cette opération est généralement appelée opération de "macrodiversité".

On précise que lorsqu'un mobile est sous la couverture de plusieurs bornes les liaisons radio sont généralement de qualités très inégales.

A la Fig. 2a, sur le multiplex Pl, le flux filtré est unique. On considère sur cette Fig. 2a, une communication sortante si bien que le flux présent sur le multiplex Pl se retrouve donc sur le multiplex PO. On notera que, dans le cas d'une communication locale, le flux sur le multiplex Pl est aiguillé, par le commutateur VCX, vers le concentrateur CTR sur lequel est connecté le destinataire.

La Fig. 2b représente le sens descendant (réseau vers mobile) de l'information. Le commutateur VCX diffuse le signal vers les deux concentrateurs CTR1 et CTR2. Le concentrateur CTR1 diffuse vers les deux bornes BR1 et BR2 alors que le concentrateur CTR2 diffuse vers la borne BR3. Le même signal est donc reçu trois fois par le mobile MB. Plus généralement, le traitement de la macrodiversité est effectué dans le mobile MB lui-même et ne pose pas de problèmes spécifiques au niveau du réseau RLAM. On notera que la connexion descendante est du type point à multipoint.

Dans un réseau ATM quel qu'il soit, l'établissement d'une connexion virtuelle est effectuée par le marquage d'un itinéraire et requiert la réservation d'une bande passante sur cet itinéraire en fonction des besoins exprimés et requis, par l'appelant au moment de l'établissement de connexion, pour le service transporté sur cet itinéraire.

Alors que dans le- cas de la téléphonie, les ressources consommées sont limitées à quelques dizaines de Kbits/s pour une communication, dans le cas de la visiophonie, les ressources consommées atteignent plutôt quelques centaines de Kbits/s, voire plus.

Classiquement un multiplex ATM supporte une bande passante supérieure à 100 Mbits/s. Ainsi, au moins au niveau de la partie locale du réseau, le nombre de connexions pour la téléphonie simultanément établies ne permettra jamais d'atteindre cette limite. Tel n'est pas le cas pour la visiophonie.

On doit d'ores et déjà tenir compte de deux facteurs qui risquent d'accroître les débits de façon significative et qui rendent nécessaires la mise en oeuvre de procédés permettant une gestion optimale des débits. D'une part, la perspective d'un déploiement à terme sur les réseaux de radiotéléphonie de nouveaux services plus gourmands en débit, tels que la visiophonie et le multimédia, est inéluctable. D'autre part, la macrodiversité qui est une caractéristique propre à ce type de réseaux a pour conséquence une augmentation des débits pendant les phases de hand-over.

Le document EP-A-679 042 a cherché à résoudre ce problème de l'augmentation de débits consommés dans le réseau d'accès en divisant celui-ci en une multitude de sous-réseaux à chacun desquels est affilié un opérateur de macrodiversité appelé dans ce document, séparateur/combineur (splitter/combiner). Ainsi, il est possible, par un simple changement approprié de l'entête des cellules qui transportent les données utilisateur (on se reportera à ce document pour des détails), d'effectuer l'opération de macrodiversité au point commun des liaisons à traiter qui se trouve le plus près possible des stations de base auxquelles le mobile est rattaché.

La présente invention cherche aussi à résoudre le problème qui est lié à l'augmentation des débits consommés pendant les phases de hand-over. Cependant, le but de la présente invention est de proposer un réseau d'accès qui évite les problèmes liés à la multiplication des opérateurs de macrodiversité qui apparaît dans le document EP-A-679 042.

A cet effet, un réseau d'accès à des mobiles qui est du type comprenant, de manière générale, une pluralité de bornes radio reliées, par l'intermédiaire d'étages de concentration, à un autre étage de concentration constitué d'un commutateur de circuits virtuels, est caractérisé en ce qu'au moins ledit étage de concentration constitué dudit commutateur de circuits virtuels est équipé d'un équipement de gestion de la macrodiversité et en ce que chaque étage de concentration en aval du ou d'un étage de concentration équipé d'un équipement de gestion de la macrodiversité est équipé d'un dispositif de gestion des débits prévu pour gérer les ressources sur le multiplex qui se trouve directement en amont de l'étage de concentration qu'il équipe.

Dans la présente description, on considère que les liaisons sont dites montantes lorsqu'elles ont pour origine une borne radio et pour terminaison le commutateur de circuits virtuels principal du réseau alors qu'elles sont dites descendantes, dans l'autre sens. En conséquence, un étage de concentration est en aval d'un second lorsqu'il se situe entre ledit second étage et une borne radio et il est en amont d'un second, lorsqu'il se situe entre ledit second étage et ledit commutateur de circuits virtuels du réseau.

Selon une autre caractéristique de l'invention, chaque dispositif de gestion contrôle le débit sur le multiplex qui se trouve directement en amont de l'étage de concentration qu'il équipe et, lorsque ledit multiplex ne peut supporter le débit demandé pour une nouvelle connexion d'une communication en phase de hand-over, commande ledit réseau pour ne pas établir ladite connexion.

Selon une autre caractéristique de l'invention, la borne d'accueil sous la couverture de laquelle un mobile déjà en communication vient de passer est prévue pour émettre un message de demande de connexion qui est transmis au dispositif de gestion équipant l'étage de concentration le plus en aval, et ledit dispositif, à la réception dudit message et lorsque le multiplex qu'il contrôle peut supporter le débit demandé pour ladite nouvelle connexion, retransmet ledit message au dispositif de gestion de l'étage de concentration directement en amont, ce processus étant poursuivi jusqu'au dispositif de gestion de l'étage de concentration (CTR, VCX) équipé d'un équipement de gestion de la macrodiversité, et, lorsque le multiplex qu'un desdits dispositifs de gestion concernés contrôle ne peut supporter le débit demandé pour ladite connexion, ledit dispositif de gestion concerné commande ledit réseau pour ne pas établir ladite connexion.

Selon une autre caractéristique de l'invention, le dispositif de gestion de l'étage de concentration qui est équipé d'un équipement serveur de macrodiversité, lorsque le multiplex qu'il contrôle peut supporter le débit demandé pour ladite nouvelle connexion, transmet, aux étages de concentration à son aval en direction de ladite borne d'accueil, un nouveau message pour le marquage, dans lesdits étages, de ladite nouvelle connexion.

Selon une autre caractéristique de l'invention, ledit message contient également une demande d'allocation d'un débit.

Selon une autre caractéristique de l'invention, le dispositif de gestion qui équipe l'étage de concentration également équipé de l'équipement de gestion de la macrodiversité contrôle les débits sur le multiplex qui relie ledit étage de concentration audit équipement de gestion de la macrodiversité.

Selon une autre caractéristique de l'invention, chaque dispositif de gestion des ressources comporte une mémoire dans laquelle est stockée et mise à jour la valeur du débit supporté par le multiplex surveillé.

Selon une autre caractéristique de l'invention, l'équipement du traitement des appels dudit réseau participe à ladite mise à jour de la mémoire de chaque dispositif de gestion des ressources.

Selon une autre caractéristique de l'invention, chaque dispositif de gestion des ressources ne surveille le débit du multiplex considéré que dans le sens montant.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un synoptique d'un réseau simplifié d'accès à des mobiles,
les Fig. 2a et 2b sont des vues du réseau de la Fig. 1 dans lesquelles sont respectivement représentés les flux montant et les flux descendant et, ce, en phase de hand-over,
la Fig. 3 est une vue partielle d'un réseau d'accès à des mobiles montrant le fonctionnement des dispositifs de gestion des ressources selon l'invention, et
la Fig. 4 est une vue partielle d'un réseau d'accès à des mobiles montrant l'implantation des dispositifs de gestion des ressources selon l'invention.

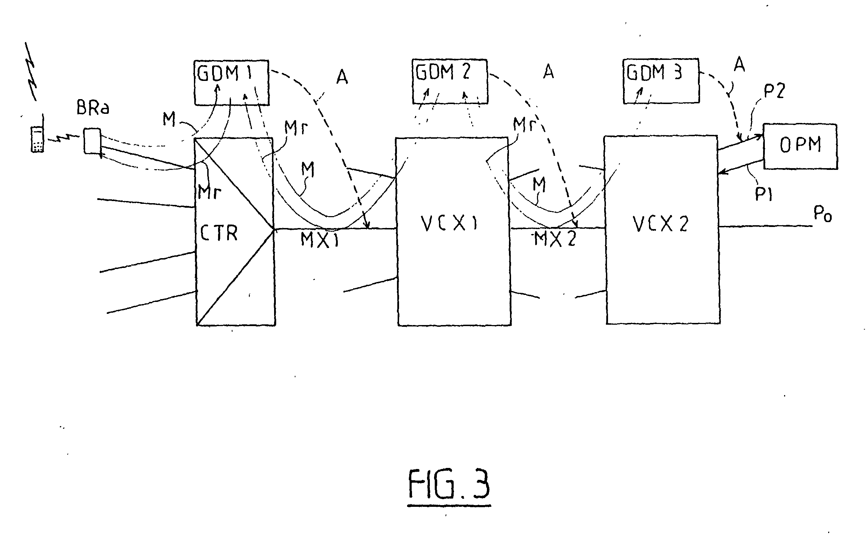

A la Fig. 3, on a représenté trois étages de concentration CTR, VCX1, VCX2 formant une partie d'un réseau d'accès à des mobiles RLAM du type de celui de la Fig. 1. Lesdits étages sont constitués d'un concentrateur CTR et deux commutateurs VCX1 et VCX2 et sont respectivement équipés de dispositifs GDM1, GDM2 et GDM3 de gestion des débits. Chaque dispositif GDM est prévu pour gérer les ressources sur le multiplex qui se trouve directement en amont de l'étage de concentration qu'il équipe. Cette fonction est symbolisée par les flèches A. Ainsi, le dispositif GDM1 gère le multiplex MX1 et le dispositif GDM2 gère le multiplex MX2. Quant au dispositif GDM3, il gère le multiplex P2, lequel relie le commutateur VCX2 à l'entrée de l'équipement de macrodiversité OPM.

Chaque dispositif GDM est équipé d'une mémoire qui totalise les ressources consommées sur le multiplex contrôlé, c'est-à-dire non seulement les débits consommés par des communications lorsqu'elles sont en phase de hand-over mais également les autres communications qui transitent par ce multiplex.

On a également représenté à la Fig. 3, une borne d'accueil BRa qui est la borne du réseau RLAM considérée sous la couverture de laquelle un mobile MB, déjà en communication avec une autre borne (non représentée) du réseau, vient de passer.

En début de phase de hand-over, c'est-à-dire au moment où ledit mobile passe sous la couverture de la borne BRa, une requête de demande de disponibilité des ressources est émise par la ou chaque borne BRa d'accueil en direction du dispositif GDM1 de l'étage de concentration le plus en aval, c'est-à-dire du concentrateur CTR auquel la borne BRa est reliée.

Dans un premier mode de réalisation, cette requête ne contient qu'un indicateur si bien que le seul fait de son arrivée suffit au dispositif GDM concerné pour prendre en compte la demande d'un débit qui est fixé par avance, par exemple 32 Kbits/s. Dans ce cas, on considère en effet que toutes les connexions ont toujours le même débit normal.

Dans un autre mode de réalisation, la requête émise par la borne d'accueil BRa contient également une demande d'allocation d'un débit correspondant explicitement à la valeur du débit qui est requise par la connexion. Dans ce cas, on considère des communications qui ont des débits différents.

On précise que le routage des différentes requêtes émises entre bornes et dispositifs GDM est effectué sur des canaux permanents préétablis à la mise en service du réseau ATM.

Lorsqu'il reçoit une requête émanant d'une borne d'accueil BRa, un dispositif de gestion des débits GDM la prend en compte.

Si, la ressource disponible sur le multiplex contrôlé par ledit dispositif GDM est suffisante pour supporter la nouvelle connexion requise résultant du hand-over, le dispositif GDM émet la même requête vers le dispositif GDM de l'étage de concentration directement en amont. Par exemple, à la Fig. 3, le dispositif GDM1 émet la requête symbolisée par des flèches marquées M vers le dispositif GDM2 qui équipe le commutateur VCX1 où elle sera analysée. Le processus se poursuit jusqu'à ce que le message M atteigne l'étage de concentration qui comporte l'équipement de macrodiversité OPM qui se trouve être, dans l'exemple de la Fig. 3, le commutateur VCX2.

On notera qu'en amont de l'étage de concentration équipé de l'équipement de macrodiversité OPM ne se pose plus le problème de la surcharge des multiplex durant les phases de hand-over et que le processus décrit ci-dessus y serait par conséquent inutile.

On rappelle que l'équipement serveur de macrodiversité OPM, comme on le mentionnait dans le préambule de la présente description, filtre les différents flux issus d'un même mobile et n'en conserve qu'un seul qui est alors réémis vers le commutateur VCX2.

Si la ressource disponible sur le multiplex P2 en direction de cet équipement OPM est suffisante, le dispositif de gestion des ressources GDM (en l'occurrence GDM2) lié au commutateur VCX (en l'occurrence VCX2) transmet en retour un message Mr vers tous les étages de concentration CTR, VCX1 en son aval en direction de la borne d'accueil BRa concernée afin de marquer, dans chacun desdits étages, la connexion de cette borne BRa. Après marquage, la connexion entre la borne d'accueil BRa et le commutateur VCX2 est réalisée et la phase de hand-over peut commencer.

On notera que la partie de réseau de la Fig. 3 est un exemple et qu'en général, une partie de réseau entre une borne BR et un étage de concentration équipé d'une équipement de macrodiversité OPM peut comporter un nombre différents de concentrateurs CTR et de commutateurs VCX. On notera encore qu'un tel étage de concentration peut être un concentrateur CTR ou bien un commutateur de circuits virtuels VCX.

En mettant en oeuvre ce procédé, on est certain que le réseau est capable d'écouler le surdébit résultant de cette nouvelle connexion sans risque de débordement des files d'attente des étages de concentration CTR, VCX.

Lorsque la phase de hand-over est achevée, le mobile est déconnecté d'une des deux bornes (soit la borne d'accueil BRa, soit l'ancienne borne). Celle-ci émet à chaque étage de concentration concerné par la connexion, un message de libération de la connexion pour effacement du marquage de cette connexion dans ledit étage. Ce message est également transmis, au niveau de chaque étage de concentration, au dispositif GDM associé lequel libère le débit réservé en décomptant dans sa mémoire la valeur de ce débit.

Par contre, si la ressource disponible est insuffisante sur l'un des multiplex MX1, MX2, P2 entre la borne d'accueil BRa et l'équipement OPM, le dispositif GDM qui a le premier détecté cette insuffisance répond négativement à la requête M émise par la borne d'accueil. Le marquage dans les étages de concentration de la connexion sur la nouvelle borne BRa est alors refusé et la phase de hand-over ne s'effectue pas.

Lorsqu'une connexion est établie au niveau d'un étage de concentration, le débit demandé est ajouté au contenu de la mémoire du dispositif de gestion GDM lié audit point de concentration. Lorsqu'une connexion est libérée à l'issue d'une phase de hand-over, la valeur du débit qu'elle supportait est soustraite à la valeur du contenu de la mémoire du dispositif GDM, comme cela a été mentionné ci-dessus.

Cette mémoire contient une valeur qui est l'image de la charge du multiplex surveillé. Elle tient compte également des débits consommés par les communications lorsqu'elles ne sont pas en phase de hand-over. Elle est donc mise à jour non seulement au cours des phases de hand-over, comme cela est explicité ci-dessus, mais également durant les phases d'établissement et de libération de toutes les communications qui transitent par le multiplex contrôlé. Cette mise à jour est, par exemple, effectuée par émission, soit directement par l'organe de traitement des appels du réseau concerné, soit par les bornes BR en début et fin des appels, de messages appropriés sur un canal permanent préétabli.

On notera que, dans ce qui précède, on a considéré que le réseau RLAM ne comporte d'un seul équipement serveur de macrodiversité OPM lequel est relié au commutateur VCX principal du réseau, c'est-à-dire au commutateur qui comporte un multiplex P0 dirigé vers l'extérieur du réseau d'accès. C'est par exemple le cas dans les réseaux qui sont représentés aux Figs. 1 à 3.

Selon une variante de réalisation d'un réseau selon l'invention, d'autres étages de concentration, tels que des concentrateurs du réseau, sont équipés d'un équipement serveur de macrodiversité OPM. Chaque serveur de macrodiversité OPM n'effectue que le filtrage des flux émanant des bornes BR connectées à l'étage de concentration concerné. Dans ce cas, seules sont traitées les situations de hand-over "locales" à l'étage de concentration CTR concerné, c'est-à-dire celles résultant de mobiles sous la couverture des bornes BR qui y sont connectées.

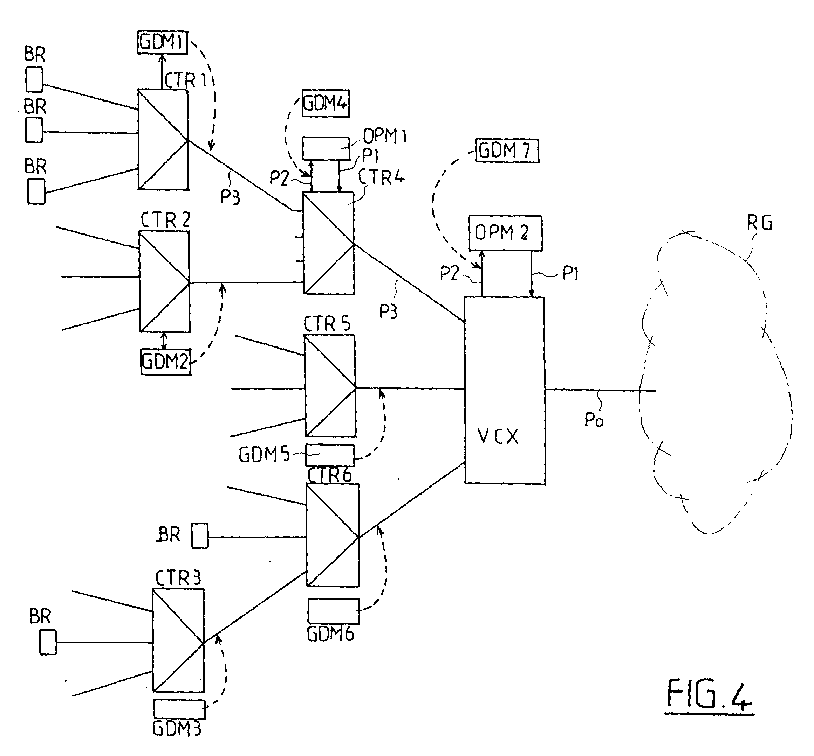

Cette situation est représentée sur le réseau d'accès de la Fig. 4 lequel comporte six concentrateurs CTR1 à CTR6 et un commutateur VCX. Les concentrateurs CTR1 et CTR2 sont reliés au concentrateur CTR4 lequel est relié au commutateur VCX. Le concentrateur CTR3 est relié au concentrateur CTR6 lequel est relié au commutateur VCX. Enfin, le concentrateur CTR5 est relié au commutateur VCX. Tous les concentrateurs CTR1 à CTR6 sont respectivement équipés des dispositifs de gestion GDM1 à GDM6. Le commutateur VCX est également équipé d'un tel dispositif GDM7. Le concentrateur CTR4 est équipé d'un équipement de macrodiversité OPM1 et il en est de même du commutateur VCX pour l'équipement OPM2.

Comme on peut le constater sur la Fig. 4, le dispositif de gestion GDM des étages de concentration qui sont équipés d'un équipement OPM surveille le multiplex en entrée de l'équipement OPM et non le multiplex en sortie de l'étage de concentration. Par exemple, le dispositif de gestion GDM4 surveille le multiplex en entrée de l'équipement OPM4 et non le multiplex en sortie du concentrateur CTR4.

Comme on peut le constater également sur la Fig. 4, la présence d'un équipement de macrodiversité OPM (en l'occurrence OPM2) rattaché au commutateur VCX est nécessaire pour filtrer les communications de hand-over qui ne transitent pas par des multiplex communs entre les bornes BR et le concentrateur VCX. Il en est par exemple ainsi d'une communication d'une borne rattachée au concentrateur CTR1 et d'une communication d'une borne rattachée au concentrateur CTR3.

Il est également nécessaire pour filtrer des communications de hand-over qui, bien que présentant un multiplex commun, n'ont pas déjà été filtrées par un autre équipement de macrodiversité. Il en est par exemple ainsi d'une communication d'une borne rattachée au concentrateur CTR3 et d'une borne rattachée au concentrateur CTR6.

Au niveau d'un étage de concentration qui est équipé d'un équipement serveur de macrodiversité OPM, le dispositif de gestion des ressources GDM contrôle le multiplex en entrée de cet équipement OPM.

Sur la Fig. 2a, on peut constater que, dans le sens montant, chaque étage de concentration (commutateur VCX, concentrateur CTR) concerné par le flux généré par un mobile lorsqu'il est en phase de hand-over, reçoit l'ensemble des flux provenant des bornes BR à la fois impliquées dans la phase de hand-over du mobile et rattachées, par l'intermédiaire des bornes BR elles-mêmes ou par l'intermédiaire des étages de concentration en aval, à l'étage de concentration proprement dit. Le flux émis est la somme de ces flux incidents.

Sur la Fig. 2b, on peut constater que dans le sens descendant, chaque étage de concentration (concentrateur CTR ou commutateur VCX) permettant d'atteindre une ou plusieurs bornes concernées par le hand-over du mobile ne reçoit qu'une seule fois le flux destiné au mobile. L'étage de concentration émet ensuite vers chaque borne ou étage de concentration aval concerné par le hand-over du mobile une seule fois ce même flux selon le procédé de diffusion ATM classique.

Si on fait l'hypothèse simplificatrice que le débit crête pour chaque connexion orientée est égal à d, on peut constater que, pour chaque multiplex du réseau RLAM, le débit du trafic montant est supérieur ou égal à celui du trafic descendant.

En effet, au niveau du multiplex P4 qui relie une borne à son concentrateur, le débit crête montant d'un mobile est égal au débit crête descendant de ce même mobile. Par contre, pour tout multiplex situé en amont d'un étage de concentration, il y a deux alternatives possibles. Si ledit point de concentration n'est concerné que par une seule des bornes impliquées dans la phase de hand-over du mobile, comme c'est le cas pour le concentrateur CTR2 des Figs. 2a et 2b, le débit crête montant d'un mobile est égal au débit crête descendant de ce même mobile. Par contre, si ledit étage de concentration est concerné par plus d'une des bornes impliquées dans la phase de hand-over du mobile, comme c'est le cas du concentrateur CTR1 des Figs. 2a et 2b, le débit crête montant d'un mobile est strictement supérieur au débit crête descendant de ce même mobile.

On constate donc que pour chaque multiplex du réseau, la somme des débits des flux montants à travers le multiplex est supérieure ou égale à celle des flux descendants. On en déduit qu'il suffit pour chaque multiplex ATM d'avoir les ressources suffisantes dans le sens montant pour être sûr de les avoir aussi dans le sens descendant. Le sens montant étant le plus critique, on s'intéressera donc essentiellement au sens montant pour la gestion des ressources.

Sur le multiplex PO, on ne trouve que le débit des communications avec l'extérieur du réseau d'accès RLAM. Les charges sont gérées par le commutateur VCX au cours des phases d'établissement des appels. Le commutateur VCX totalise les débits requis par les connexions et refuse les nouveaux appels lorsque le débit sur le multiplex PO a atteint une valeur correspondant à sa capacité maximum. On rappelle que seules les connexions du plan usager sortant du réseau d'acccès RLAM ou entrant dans le réseau d'accès RLAM transitent par ce multiplex. Le débit consommé pour chaque sens de la communication est égal à (S x d), avec S : nombre de connexions sortantes et d : débit crête d'une connexion. A ce niveau, la macrodiversité ayant été effectuée la charge ne varie pas au cours des phases de hand-over. La gestion de la ressource sur PO ne soulève aucune difficulté car elle est en fait résolue par le commutateur VCX.

Sur le multiplex P4, le trafic est limité par les capacités de transfert des canaux radio et là aussi, la gestion de ressource sur ce multiplex ne pose pas de problème particulier. Il suffit donc de dimensionner le multiplex P4 pour la capacité maximum offerte par les supports radio.

Comme pour le multiplex P0, les charges sur le multiplex P1 sont gérées par le commutateur VCX au cours des phases d'établissement des appels. Le commutateur VCX totalise les débits requis par les connexions et refuse les nouveaux appels lorsque le débit sur le multiplex Pl atteint la capacité maximum. A ce niveau, l'opération de macrodiversité ayant été effectuée, la charge ne varie pas au cours des phases de hand-over. La gestion de la ressource sur Pl ne soulève donc aucune difficulté car elle est résolue par le commutateur VCX.

Sur le multiplex P2, le taux d'occupation varie en fonction des phases de hand-over. On se trouve en présence de fluctuations de type rafales dont les longueurs sont fonction des durées des phases de hand-over. On considère tout d'abord une situation "hors hand-over". Le taux d'occupation sur le multiplex P2 est égal à celui du multiplex Pl. On considère maintenant une situation de hand-over. C'est le cas du fonctionnement normal du réseau d'accès RLAM. Avant que le flux du trafic usager d'un mobile ne migre d'une borne BR vers une autre borne BR, les débits montants des bornes BR vers le commutateur VCX sont multipliés par b tant que les flux correspondants n'ont pas traversé l'équipement de macrodiversité OPM. Ces surcharges s'ajoutent sur le multiplex P2 et peuvent conduire à un débordement et à des pertes, si le multiplex P2 est déjà à un niveau de charge important. Or, ces fluctuations sont absolument imprévisibles et ne peuvent pas être gérées par le commutateur VCX qui n'a aucune vision de l'activité du réseau RLAM mesurée en terme de procédures de hand-over.

Dans ce raisonnement, on fait l'hypothèse que les ressources radio sont toujours disponibles et n'interdisent pas les phases de hand-over. Ceci revient également à dire que les canaux radio d'une borne BR ne peuvent pas être en totalité utilisés à l'établissement des appels.

Sur le multiplex P3, le problème est à moindre degré celui posé sur le multiplex P2. Du fait que le multiplex P3 est en sortie d'un premier point de concentration de flux, en l'occurrence en sortie du concentrateur CTR, seule une partie du flux remontant vers le multiplex P2 traverse le multiplex P3.

On notera que, dans une architecture plus complexe à plusieurs niveaux de concentrateurs, le problème décrit sur le multiplex P2 pourrait se poser sur plusieurs interfaces.

Ainsi, dans le modèle de réseau standard simple considéré, les goulots d'étranglement où il y a un risque d'une dégradation de la qualité du service consécutif à une surcharge est le multiplex P3 entre un concentrateur CTR et le commutateur VCX et le multiplex P2 entre le commutateur VCX et l'équipement serveur de macrodiversité OPM. C'est donc à ces interfaces que le dispositif de contrôle des débits doit être placé.

## Revendications

1. Réseau d'accès à des mobiles du type qui comprend une pluralité de bornes radio (BR) reliées, par l'intermédiaire d'étages de concentration (CTR, VCX), à un autre étage de concentration constitué d'un commutateur de circuits virtuels (VCX), caractérisé en ce qu'au moins ledit étage de concentration constitué dudit commutateur de circuits virtuels (VCX) est équipé d'un équipement de gestion de la macrodiversité (OPM) pour filtrer les flux issus d'un même mobile rattaché à plusieurs bornes radio (BR) et en ce que chaque étage de concentration (CTR, VCX) en aval du ou d'un étage de concentration (CTR, VCX) équipé d'un équipement serveur de macrodiversité (OPM) est équipé d'un dispositif de gestion des débits (GDM) prévu pour pouvoir, d'une part, contrôler le débit sur le multiplex qui se trouve directement en amont de l'étage de concentration qu'il équipe et, d'autre part, commander ledit réseau pour ne pas établir une connexion demandée par un mobile qui est déjà en communication et qui vient de passer sous la couverture d'une nouvelle borne radio (BR) lorsque ledit multiplex contrôlé par ledit dispositif (GDM) ne peut supporter le débit demandé pour ladite nouvelle connexion.

2. Réseau d'accès à des mobiles selon la revendication 1, caractérisé en ce que la borne d'accueil (BR) sous la couverture de laquelle un mobile déjà en communication vient de passer est prévue pour transmettre au dispositif de gestion (GDM) équipant l'étage de concentration (CTR) le plus en aval, un message contenant une requête de demande de disponibilité des ressources pour une nouvelle connexion, en ce que ledit dispositif (GDM), à la réception d'un message contenant une requête de demande de disponibilité des ressources pour une nouvelle connexion émanant d'une borne d'accueil (BR) est prévu pour soit retransmettre ledit message au dispositif de gestion (GDM) de l'étage de concentration directement en amont de lui lorsque le multiplex qu'il contrôle peut supporter le débit demandé pour ladite nouvelle connexion, soit commander ledit réseau pour ne pas établir ladite connexion lorsque le multiplex qu'il contrôle ne peut supporter le débit demandé pour ladite connexion, et ainsi de suite jusqu'au dispositif de gestion (GDM) de l'étage de concentration (CTR, VCX) équipé d'un équipement serveur de macrodiversité (OPM).

3. Réseau d'accès à des mobiles selon la revendication 2, caractérisé en ce que le dispositif de gestion (GDM) de l'étage de concentration qui est équipé d'un équipement serveur de macrodiversité (OPM) est prévu pour transmettre, lorsque le multiplex qu'il contrôle peut supporter le débit demandé pour ladite nouvelle connexion, aux étages de concentration (CTR) à son aval en direction de ladite borne d'accueil (BRa), un message demandant le marquage, dans lesdits étages (CTR), de ladite nouvelle connexion.

4. Réseau d'accès à des mobiles selon une des revendications précédentes, caractérisé en ce que ledit message contenant une requête de demande de disponibilité des ressources pour une nouvelle connexion contient également une demande d'allocation d'un débit.

5. Réseau d'accès à des mobiles selon une des revendications précédentes, caractérisé en ce que le dispositif de gestion (GDM) qui équipe l'étage de concentration également équipé de l'équipement serveur de macrodiversité (OPM) est prévu pour contrôler les débits sur le multiplex qui relie ledit étage de concentration audit équipement serveur de macrodiversité (OPM).

6. Réseau d'accès à des mobiles selon une des revendications précédentes, caractérisé en ce que chaque dispositif de gestion des ressources (GDM) comporte une mémoire dans laquelle est stockée et mise à jour la valeur du débit supporté par le multiplex contrôlé.

7. Réseau d'accès à des mobiles selon la revendication 6, caractérisé en ce qu'il comporte un équipement du traitement des appels dudit réseau, ledit équipement étant prévu pour participer à ladite mise à jour de la mémoire de chaque dispositif de gestion des ressources (GDM).

8. Réseau d'accès à des mobiles selon une des revendications précédentes, caractérisé en ce que chaque dispositif de gestion des ressources (GDM) est prévu pour ne contrôler le débit du multiplex considéré que dans le sens montant.

## Patentansprüche

1. Netz mit Zugang für mobile Teilnehmer, bestehend aus einer Mehrzahl von Funkklemmen (BR), die mit Hilfe von Konzentrationsstufen (CTR, VCX) mit einer weiteren Konzentrationsstufe verbunden sind, die von einem virtuellen Leitungsumschalter (VCX) gebildet wird, dadurch gekennzeichnet, daß mindestens die Konzentrationsstufe, die von dem virtuellen Leitungsumschalter (VCX) gebildet wird, mit einer Ausrüstung zur Steuerung der Makrodiversität (OPM) versehen ist, um die von einem selben, an mehrere Funkklemmen (BR) angeschlossenen mobilen Teilnehmer kommenden Flüsse zu filtern, und daß jede Konzentrationsstufe (CTR, VCX) im Nachlaufbereich der bzw. einer Konzentrationsstufe (CTR, VCX), die mit einem Makrodiversitäts-Server (OPM) versehen ist, mit einer Vorrichtung zur Steuerung der Leistungen (GDM) ausgestattet ist, die dazu vorgesehen ist, einerseits die Leistung auf dem Multiplex zu steuern, welches sich direkt im Vorlaufbereich der Konzentrationsstufe befindet, die mit diesem versehen ist, und andererseits das Netz derart zu steuern, um einen Anschluß, der von einem mobilen Teilnehmer gefordert wird, welcher sich bereits in Kommunikation befindet und soeben unter den Abdeckbereich einer neuen Funkklemme (BR) gelangt ist, nicht herzustellen, wenn das von der Vorrichtung (GDM) kontrollierte Multiplex die geforderte Leistung für den neuen Anschluß nicht bieten kann.

2. Netz mit Zugang für mobile Teilnehmer nach Anspruch 1, dadurch gekennzeichnet, daß die Aufnahmeklemme (BR), unter deren Abdeckbereich ein bereits in Kommunikation befindlicher mobiler Teilnehmer gelangt ist, dazu vorgesehen ist, an die Steuervorrichtung (GDM), mit der die am weitesten im Nachlaufbereich befindliche Konzentrationsstufe (CTR) versehen ist, eine Meldung über die Anforderung verfügbarer Ressourcen für einen neuen Anschluß zu entsenden, daß die Vorrichtung (GDM) bei Erhalt einer Meldung, die eine Anforderung verfügbarer Ressourcen für einen neuen Anschluß enthält, der von einer Aufnahmeklemme (BR) kommt, dazu vorgesehen ist, entweder diese Meldung an die Steuervorrichtung (GDM) der direkt im Vorlaufbereich befindlichen Konzentrationsstufe (GDM) zurückzusenden, wenn das von ihr gesteuerte Multiplex die geforderte Leistung für den neuen Anschluß bieten kann, oder das Netz derart zu steuern, daß dieser Anschluß nicht hergestellt wird, wenn das von ihr gesteuerte Multiplex die geforderte Leistung für den Anschluß nicht bieten kann, und so weiter bis zur Verwaltungseinrichtung (GDM) der Konzentrationsstufe (CTR, VCX), die mit einem Makrodiversitäts-Server (OPM) versehen ist.

3. Netz mit Zugang für mobile Teilnehmer nach Anspruch 2, dadurch gekennzeichnet, daß die Steuereinrichtung (GDM) der Konzentrationsstufe, die mit einem Makrodiversitäts-Server (OPM) versehen ist, dazu vorgesehen ist, wenn das von ihr gesteuerte Multiplex die geforderte Leistung für den neuen Anschluß bieten kann, an die Konzentrationsstufen (CTR) in ihrem Nachlaufbereich in Richtung der Aufnahmeklemme (BRa) eine neue Meldung zu entsenden, die die Kennzeichnung der neuen Anschlüsse in diesen Stufen (CTR) fordert.

4. Netz mit Zugang für mobile Teilnehmer nach einem der vorhergehenden Ansprüche, dadurch gekennzeichnet, daß die Meldung, die eine Anforderung der Verfügbarkeit der Ressourcen für einen neuen Anschluß enthält, auch eine Anforderung für eine Leistungszuteilung enthält.

5. Netz mit Zugang für mobile Teilnehmer nach einem der vorhergehenden Ansprüche, dadurch gekennzeichnet, daß die Steuervorrichtung (GDM), mit der die Konzentrationsstufe versehen ist, die auch mit der Steuereinrichtung für die Makrodiversität (OPM) ausgestattet ist, dazu vorgesehen ist, die Leistungen auf dem Multiplex, das die Konzentrationsstufe mit der Steuereinrichtung der Makrodiversität (OPM) verbindet, zu steuern.

6. Netz mit Zugang für mobile Teilnehmer nach einem der vorhergehenden Ansprüche, dadurch gekennzeichnet, daß jede Einrichtung zur Verwaltung der Ressourcen (GDM) einen Speicher umfaßt, in dem der Wert der von dem überwachten Multiplex gebotenen Leistung gespeichert und aktualisiert wird.

7. Netz mit Zugang für mobile Teilnehmer nach Anspruch 6, dadurch gekennzeichnet, daß es eine Ausrüstung zur Anrufbearbeitung des Netzes umfaßt, wobei diese Ausrüstung dazu vorgesehen ist, an der Aktualisierung des Speichers jeder Einrichtung zur Verwaltung der Ressourcen (GDM) beteiligt zu sein.

8. Netz mit Zugang für mobile Teilnehmer nach einem der vorhergehenden Ansprüche, dadurch gekennzeichnet, daß jede Einrichtung zur Verwaltung der Ressourcen (GDM) dazu vorgesehen ist, die Leistung des betreffenden Multiplex nur in aufsteigende Richtung zu verwalten.

## Claims

1. Mobile access network of the kind comprising a plurality of radio terminals (BR) connected, by means of concentration stages (CTR, VCX), to another concentration stage comprising a virtual circuit switch (VCX), characterised in that at least the said concentration stage comprising the said virtual circuit switch (VCX) is provided with a macrodiversity management installation (OPM) to filter the flows originating from the same mobile linked to several radio terminals (BR), and in that each concentration stage (CTR, VCX) downstream of the or of a concentration stage (CTR, VCX) provided with a macrodiversity server installation (OPM) is provided with a capacity management device (GDM) designed, firstly, to monitor the capacity at the multiplex which is located directly upstream of the concentration stage for which it is provided and, secondly, to instruct said network not to make a connection requested by a mobile which is already in communication and which has just passed into the range of a new radio terminal (BR) when the said multiplex monitored by the said device (GDM) cannot carry the capacity requested for the said new connection.

2. Mobile access network according to claim 1, characterised in that the receiving terminal (BR) into the range of which a mobile already in communication has just passed is designed to transmit to the management device (GDM) provided to the concentration stage (CTR) furthest downstream a message containing a resource availability requirement request for a new connection, in that the said device (GDM), on receipt of a message containing a resource availability requirement request for a new connection sent by a receiving terminal (BR), is designed either to retransmit said message to the management device (GDM) of the concentration stage directly upstream thereof when the multiplex it controls is able to carry the capacity required for said new connection, or to command said network not to make the aforementioned connection when the multiplex it controls cannot carry the capacity required for said connection, and so on up to the management device (GDM) of the concentration stage (CTR, VCX) provided with a macrodiversity server installation (OPM).

3. Mobile access network according to claim 2, characterised in that the management device (GDM) of the concentration stage which is provided with a macrodiversity server installation (OPM) is designed to transmit to the concentration stages (CTR) downstream thereof in the direction of said receiving terminal (BRa) a message requesting the marking, at the said concentration stages (CTR), of the said new connection when the multiplex which it monitors is able to carry the capacity required for said new connection.

4. Mobile access network according to one of the precious claims, characterised in that said message containing a resource availability requirement request for a new connection also contains a request for a capacity allocation.

5. Mobile access network according to one of the previous claims, characterised in that the management device (GDM) provided for the concentration stage also provided with the macrodiversity server installation (OPM) is designed to control the capacities at the multiplex which connects said concentration stage to said macrodiversity server installation (OPM).

6. Mobile access network according to one of the previous claims, characterised in that each resource management device (GDM) comprises a memory in which is stored and updated the value of the capacity carried by the multiplex monitored.

7. Mobile access network according to claim 6, characterised in that it comprises an installation for processing the calls of said network, the said installation being designed to participate in the said memory updating of each resource management device (GDM).

8. Mobile access network according to one of the previous claims, characterised in that each resource management device (GDM) is designed to monitor the capacity of the relevant multiplex in the up direction only.
